# EUROPÄISCHE PATENTSCHRIFT

(11) **EP 0 502 165 B1**
(45) Veröffentlichungstag und Bekanntmachung des Hinweises auf die Patenterteilung: **24.01.1996**
(21) Anmeldenummer: 91917251.0
(22) Anmeldetag: 27.09.1991
(51) Int. Cl.: G01S 17/58, G01S 7/48, G02B 27/14

(54) **OPTISCHES GERÄT, INSBESONDERE ZUR MESSUNG DER GESCHWINDIGKEIT EINER BEWEGTEN OBERFLÄCHE MITTELS EINES VON EINEM LASER AUSGEHENDEN MESSLICHTSTRAHLS**
OPTICAL DEVICE, ESPECIALLY FOR MEASURING THE SPEED OF A MOVING SURFACE BY MEANS OF A MEASURING LIGHT BEAM FROM A LASER
APPAREIL OPTIQUE, NOTAMMENT DE MESURE DE LA VITESSE D'UNE SURFACE EN MOUVEMENT AU MOYEN D'UN FAISCEAU DE LUMIERE DE MESURE EMISE PAR UN LASER

(30) Priorität: 27.09.1990 DE 9013557 U
(43) Veröffentlichungstag der Anmeldung: 09.09.1992
(73) Patentinhaber: Mesacon Gesellschaft für Messtechnik mbH, D-44227 Dortmund (DE)
(72) Erfinder: GREBE, Volker, D-4630 Bochum (DE)
(74) Vertreter: Patentanwälte Wenzel & Kalkoff
(86) Internationale Anmeldenummer: EP9101854
(87) Internationale Veröffentlichungsnummer: WO9206388

(56) Entgegenhaltungen:
- FR-A- 933 540
- US-A- 4 948 257
- US-H- 396

## Beschreibung

Die Erfindung betrifft ein optisches Gerät, insbesondere zur Messung der Geschwindigkeit einer bewegten Oberfläche mittels eines von einem Laser ausgehenden Meßlichtstrahls, der in zwei konvergierend auf das Meßobjekt gerichtete Teilstrahlen getrennt wird, wobei in den Meßlichtstrahl des Lasers ein Strahlenteiler geschaltet ist und jedem so erzeugten Teilstrahl ein Prisma zugeordnet ist, in dem der jeweilige Teilstrahl zur Verstärkung der Trennung der beiden Teilstrahlen voneinander mit Bezug auf eine zwischen den Teilstrahlen liegende Mittelebene im wesentlichen senkrecht zu dieser nach außen geführt wird.

Bei einem bekannten optischen Gerät der vorstehenden Art zur Messung von Längen und Geschwindigkeiten wird ein von einem Laser - der Begriff "Laser" wird der Einfachheit halber für einen Laserresonator verwendet ausgehender Lichtstrahl in zwei Teilstrahlen zerlegt, die unter verschiedenen Winkeln auf die bewegte Oberfläche insbesondere eines Gegenstandes gerichtet werden, deren Geschwindigkeit bzw. Länge kontinuierlich gemessen werden soll. Das von dieser Oberfläche zurückgestreute Laserlicht wird mit optischen Mitteln erfaßt und zur Auswertung einem Fotodetektor zugeführt. Da beide Teilstrahlen denselben Ort der Oberfläche des Meßobjektes treffen, findet eine Überlagerung der unterschiedlich doppler-verschobenen Streulichtwellen statt. Hierdurch entsteht eine Schwebung, deren Frequenz proportional zur Geschwindigkeit der bewegten Oberfläche ist. Die gesuchte Geschwindigkeit bzw. Länge kann kontinuierlich aus der Modulationsfrequenz ermittelt und dargestellt bzw. angezeigt werden.

Bei einem bekannten optischen Gerät dieser Art fallen die beiden Teilstrahlen entweder parallel oder divergent in zwei spiegelsymmetrisch zueinander angeordnete Prismen ein und werden dort mit Bezug auf ihre Mittelebene zur Verstärkung der Trennung der Teilstrahlen voneinander nach außen abgelenkt. Sie verlassen die Prismen mit paralleler Ausrichtung, im Falle parallel eintretender Teilstrahlen durch entsprechend parallele Reflexionsflächen der Prismen. Damit sich die Teilstrahlen an einem vorgegebenen Schnittpunkt schneiden, wird jeder Teilstrahl anschließend durch ein keilförmiges Prisma geführt, das für die Winkeleinstellung des betreffenden Teilstrahls justierbar auf einer Halterung angeordnet ist, nämlich drehbar um eine zur Mittelebene zwischen den beiden Prismen parallele Drehachse. Für eine genaue Winkeleinstellung der Teilstrahlen ist folglich eine sehr genaue Justierung erforderlich und vor allem auch unter allen Umständen des praktischen Betriebes beizubehalten. Zum einen sind die Eingangsprismen jeweils gegenüber den nachfolgenden Keilprismen zu justieren, und zum anderen ist die Winkelstellung des Keilprismas mit Bezug auf den Schnittwinkel des austretenden Teilstrahls mit der Mittelebene zwischen den Prismenanordnungen zu justieren. Mit anderen Worten sind vier Einzelprismen mit Bezug auf die Position und Winkellage ihrer spiegelnden und brechenden Flächen genau aufeinander abzustimmen. Denn beispielsweise hängt die Dopplerfrequenz entscheidend vom Schnittwinkel der beiden Teilstrahlen ab, der durch das Sendeprisma festgelegt wird.

Die Beibehaltung einer Justierung der Prismen ist vor allem durch eine Verklebung der Prismen problematisch, die nämlich im Falle von Wärmedehnungen, denen die Einzelprismen ausgesetzt sind, nicht verhindern können, daß sich die gegenseitige Lage der spiegelnden und auch der brechenden Flächen der Prismen und damit auch die Schnittwinkel der aus den Keilprismen austretenden Teilstrahlen mit der Mittelebene entsprechend ändern.

Auch der Aufwand für die Herstellung von vier Einzelprismen und deren justierbare Anordnung zueinander ist beträchtlich und verteuert die Geräteherstellung entsprechend.

Eine mit dem zuvor beschriebenen optischen Gerät vergleichbare Vorrichtung zur Erhöhung der Genauigkeit bei der Messung mit Hilfe von Laserstrahlen ist aus der US 4 948 257 bekannt. Bei diesem Meßinstrument ist einer Laserquelle ein Strahlteiler nachgeschaltet. Jedem der beiden so erzeugten Teilstrahlen ist ein Prisma zugeordnet, in dem der in das Prisma eintretende Teilstrahl zur Verstärkung der Trennung der Teilstrahlen voneinander in bezug auf die Mittelebene zwischen den Teilstrahlen im wesentlichen senkrecht von diesen nach außen geführt wird. Innerhalb des Prismas erfolgt eine zweite Ablenkung des Teilstrahls, so daß letztlich beide Teilstrahlen weiter gespreizt und in paralleler Ausrichtung zueinander aus den spiegelbildlich angeordneten Prismen austreten. Das für den Meßvorgang erforderliche konvergente Zulaufen der Teilstrahlen auf einen gemeinsamen Schnittpunkt wird anschließend durch je ein weiteres, in den jeweiligen Teilstrahl eingebrachtes keilförmiges Prisma bewirkt. Zur Erzielung einer verstärkten Spreizung der Teilstrahlen und deren darauffolgender konvergenter Zusammenführung ist somit auch bei diesem optischen Meßinstrument die Anordnung von vier Einzelprismen - verbunden mit den oben dargelegten Nachteilen - erforderlich.

Bei einem anderen bekannten optischen Gerät werden zwei Prismen miteinander verklebt, in die der Meßlichtstrahl ungeteilt eintritt und durch entsprechende Anordnung der spiegelnden und brechenden Flächen in zwei Teilstrahlen zerlegt wird, die - mit Bezug auf die Mittelebene - zur Strahltrennung in den Prismen nach außen geführt werden und parallel aus den Prismen austreten. Hinter den beiden Prismen ist eine Linse angeordnet, die die Teilstrahlen konvergierend ablenkt, damit sie sich an dem vorgegebenen Schnittpunkt treffen. Auch diese optische Anordnung bedingt einen hohen Herstellungsaufwand. Bei koaxialem Strahlengang sind Linsen mit großem Durchmesser notwendig, die entsprechend teuer sind und deren optische Qualität in den Randbereichen, wo der Strahlendurchgang erfolgt, deutlich abnimmt, und wo vor allem die Brennweite ungenau ist, so daß der vorgegebene Schnittwinkel der beiden Teilstrahlen nur sehr schwer genau einzustellen ist. Auch die anderen Nachteile, die bereits für das vorgehend beschriebene optische Gerät dargestellt wurden, gelten auch für dieses Gerät, insbesondere die mit der Verklebung der Prismen zusammenhängenden Probleme.

Es besteht daher die Aufgabe, ein Sendeprisma für ein optisches Gerät der eingangs genannten Art zu schaffen, das mit relativ geringem Aufwand herstellbar sowie leicht justierbar ist, bei dem ferner die beim Einrichten des Geräts vorgenommene Einstellung beibehalten wird und das vor allem von Umgebungseinflüssen wie Wärmeeinwirkungen, Erschütterungen etc. weitgehend unabhängig ist.

Diese Aufgabe wird erfindungsgemäß bei einem optischen Gerät der eingangs erwähnten Art mit den Merkmalen des Kennzeichens des Patentanspruchs 1 gelöst.

Die Erfindung beschreitet folglich einen neuen Weg, inäem die Prismen und anderen optischen Elemente zur Verstärkung der Trennung der Teilstrahlen sowie zur Umlenkung der Teilstrahlen zur Erzielung der notwendigen Konvergenz in einem einzigen Prismenkörper für jeden Teilstrahl vereinigt werden und dieses Prismenpaar in genauer Justierung zueinander auf einer ebenen Platte, die vorzugsweise aus einer planparallelen Glasplatte bestehen soll, dauerhaft befestigt wird. Diese Komponentenbauweise erlaubt eine Fertigung der Prismen und gleichzeitig deren Befestigung auf einer planparallelen Glasplatte durch einen Hersteller für optische Gläser, so daß der Aufwand für die Fertigung und für eine dauerhafte Justierung relativ gering gehalten wird. Denn der Hersteller des optischen Geräts braucht die Prismen nur als fertige und bereits an der Glasplatte zueinander sowie zu der Platte selbst justierte Komponenten zu verarbeiten.

Eine schwierige Justierung entfällt ohnehin, da die zur Verstärkung der Strahltrennung und zur Herbeiführung der Strahlenkonvergenz notwendigen Mittel erfindungsgemäß auf die brechenden und reflektierenden Flächen der beiden Prismen beschränkt werden. Die Probleme einer unerwünschten Verschiebung bzw. Verstellung der Prismen mit der Notwendigkeit einer Nachjustierung, wie beim Stand der Technik, entfallen. Prinzipbedingt sind sogar gewisse Ungenauigkeiten der Montageposition unkritisch, wie noch deutlich wird. Auch die Temperaturprobleme der bekannten Geräte sind gering, da die errindungsgemäße Prismenanordnung den Vorteil eines homogenen Materials aufweist. Die Befestigung und Justierung der Prismen mit ihren Grundflächen auf einer planparallelen Glasplatte gewährleistet einen sehr hohen Genauigkeitsgrad der Parallelität bzw. der planparallelen Ausrichtung der beiden Prismen zueinander, und die Glasplatte selbst läßt sich, wie noch beschrieben wird, leicht in einer Halterung aufnehmen, die ihrerseits genau positioniert in das optische Gerät einsetzbar ist.

Entscheidend ist, daß die Erfindung eine genaue Einstellung des Schnittwinkels zwischen den Sendestrahlen bzw. den beiden Teilstrahlen in einfacher Weise gestattet, und die Beibehaltung dieser Einstellung auch unabhängig ist von temperaturbedingten und/oder mechanischen Einwirkungen, so daß das Sendeprisma in dem optischen Gerät einfach, zuverlässig und wartungsfrei ist.

Die Vorteile der Erfindung werden besonders deutlich, wenn die beiden Prismen aus zwei etwa rhomboederförmigen Prismen bestehen, die jeweils mit einer ihrer etwa parallelogrammförmigen Grundflächen auf der ebenen Platte befestigt und dort zu einer zu den parallelen Seitenflächen der Platte senkrechten Mittelebene spiegelsymmetrisch übereinander sowie derart angeordnet sind, daß die divergent in die Prismen einfallenden Teilstrahlen auf einen größeren Abstand voneinander gespreizt werden und konvergent auf einen gemeinsamen Schnittpunkt zulaufend aus den Prismen austreten.

Die den Strahlengang bestimmenden Grenzflächen der etwa rhomboederförmigen Prismen werden vom Hersteller optischer Gläser mit sehr hoher Genauigkeit zueinander positioniert, so daß die brechenden und spiegelnden Flächen in der Praxis stets die ihnen vom Hersteller erteilte Zuordnung behalten. Erfindungsgemäß ist vorgesehen, daß die divergent in die etwa rhomboederförmigen Prismen eintretenden und konvergent aus diesen austretenden Teilstrahlen jeweils an der Eintrittsfläche einer Brechung, an der ersten und zweiten Gegenfläche jeweils einer Reflexion und an der Austrittsfläche erneut jeweils einer Brechung unterliegen. Vorzugsweise wird dabei der Teilstrahl an der Eintrittsfläche jeweils zum Einfallslot hin und an der Austrittsfläche jeweils vom Einfallslot weg gebrochen. Die Brechung an der Austrittsfläche kann jedoch auch, wie noch deutlich wird, den Wert Null haben.

Zur Gestaltung der in erfindungsgemäßer Weise vorgesehenen etwa rhomboederförmigen Prismen ist ferner vorgesehen, daß der Neigungswinkel der zweiten Gegenfläche zur Mittelebene geringfügig kleiner als der Neigungswinkel der ersten Gegenfläche gegenüber der Mittelebene ist. Hierdurch wird bereits die Konvergenz der die Austrittsfläche verlassenden Teilstrahlen vorgegeben.

Vorzuziehen ist jedoch, daß der Neigungswinkel der zweiten Gegenfläche zur Mittelebene geringfügig kleiner als der Neigungswinkel der ersten Gegenfläche gegenüber der Mittelebene ist und in Verbindung mit dieser Lage bei der zweiten Gegenfläche die Austrittsfläche jedes Prismas um einen derartigen geringen Winkelbetrag gegenüber einer ersten zur Mittelebene senkrechten Ebene nach außen geneigt ist, so daß eine vorgegebene Konvergenz der austretenden Teilstrahlen ohne Brechung an der Austrittsfläche erreicht wird. Der Winkelbetrag ist abhängig von dem Neigungswinkel der zweiten Gegenfläche zur Mittelebene. Auf jeden Fall kann nach dieser Weiterentwicklung der Erfindung die Brechung an der Austrittsfläche entfallen, so daß die Meßgenauigkeit des optischen Geräts von Temperaturschwankungen fast vollständig unabhängig wird.

Die Prismen sind vorzugsweise mittels eines optischen Klebers auf der planparallelen Glasplatte befestigt. Diese Befestigung ist widerstandsfähig gegenüber mechanischen und wärmebedingten Einflüssen, zumal die Wärmeausdehnungskoeffizienten der miteinander verklebten Materialien gleich sind.

Die aus den beiden Prismen und der Glasplatte bestehenden Komponente soll in einfacher Weise in eine Halterung einsetzbar sein, die ihrerseits mit geringem Aufwand herstellbar ist und sicher sowie leicht justierbar in den Strahlengang zu integrieren ist. Hierfür ist erfindungsgemäß vorgesehen, daß die Halterung aus einer Grundplatte mit zwei senkrecht von der Grundplatte ausgehenden und parallel sowie mit Zwischenraum angeordneten und mit planparallelen Flächen versehenen Wangen besteht, die Grundplatte ein Fenster für den Durchgang der Teilstrahlen aufweist und die Wangen im Zwischenraum eine Aufnahme für die aus der Platte und den beiden Prismen bestehende Komponente bilden. Die über die Grundplatte miteinander verbundenen Wangen halten die Prismenkomponente in der notwendigen parallelen Zuordnung zu der Halterung aufgrund ihrer planparallelen Flächen. Diese Halterung ist in einfacher Weise herstellbar und gewährleistet eine zuverlässige, widerstandsfähige und leicht herzustellende Anordnung der Prismenkomponente in dem optischen Gerät.

Für eine leichte und zuverlässige Montage der Prismenkomponente ist erfindungsgemäß vorgesehen, daß die Aufnahme aus einer planparallelen Stützfläche an einer der Wangen als Anlage für die Platte und aus einer an der anderen Wange ausgebildeten Klemmvorrichtung besteht, beispielsweise aus einer Klemmschraube mit einer entsprechenden Gewindebohrung in der anderen Wange.

Die für die Halterung gewählte Konstruktion aus einer Grundplatte mit zwei senkrecht von der Grundplatte ausgehenden Wangen gestattet eine zuverlässige Aufnahme und Führung der Halterung in einer üblichen Vier-Stangen-Halterung des optischen Geräts, mit der auch die anderen im Strahlengang liegenden Komponenten befestigt und einander zugeordnet sind. Hierfür erstrecken sich erfindungsgemäß durch die Grundplatte und durch die Wangen hindurch Bohrungen zur Aufnahme der Vier-Stangen-Halterung. Durch die Hindurchführung der Stangen durch die Grundplatte und die Wangen über deren Breite ergibt sich eine lange und entsprechend genaue Führung der Prismenhalterung an den vier Stangen.

Durch die erfindungsgemäßen optischen Verhältnisse ist nicht nur die genaue Lage der Prismenkomponente in der Halterung unkritisch, jedenfalls mit Bezug auf die Lage der Prismenkomponente in entsprechenden Vertikalebenen, sondern auch die Lage der beiden Rhomboeder zueinander. Eine relative Vertikalverschiebung oder Drehbewegung der rhomboederförmigen Prismen in einer Vertikalebene ändert nichts an der vorbestimmten Lage der austretenden Teilstrahlen und an dem Schnittwinkel derselben. Voraussetzung ist naturgemäß, daß die Teilstrahlen durch die Eintrittsflächen der Prismen hindurch in diese eintreten können.

Ein Ausführungsbeispiel der Erfindung wird nachstehend mit Bezug auf die Zeichnung näher erläutert. In der Zeichnung zeigen:
Fig. 1 eine Seitenansicht eines optischen Gerätes zur Messung der Geschwindigkeit einer bewegten Oberfläche mittels eines von einem Laser ausgehenden Meßlichtstrahls;
Fig. 2 eine Draufsicht, Fig. 3 eine Vorderansicht und Fig. 4 eine Rückansicht des Gerätes von Fig. 1;
Fig. 5 eine perspektivische Ansicht eines Sendeprismas in einer Halterung;
Fig. 6 eine Seitenansicht des auf einer Glasplatte aus optischem Glas befestigten Sendeprismas.

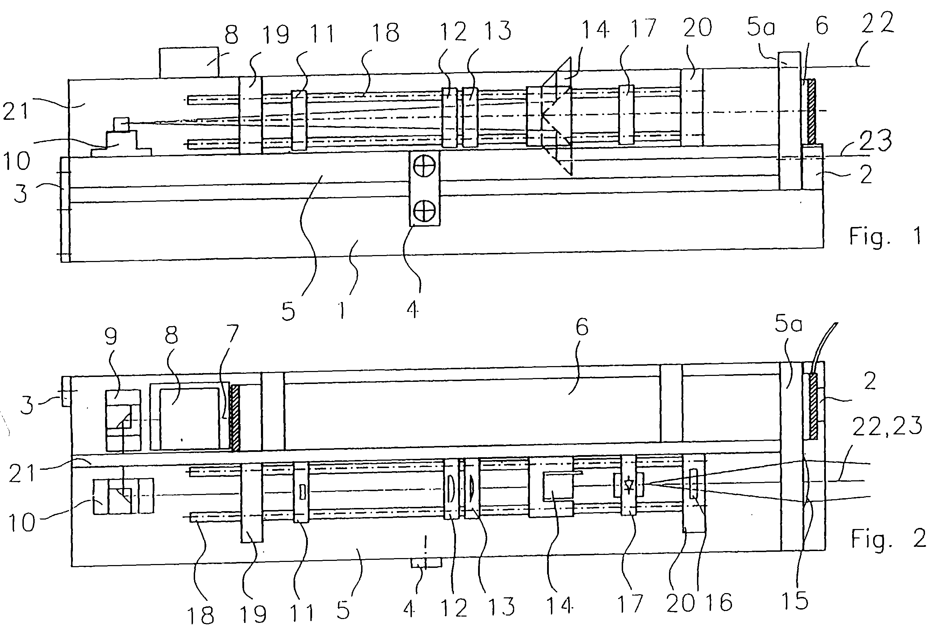

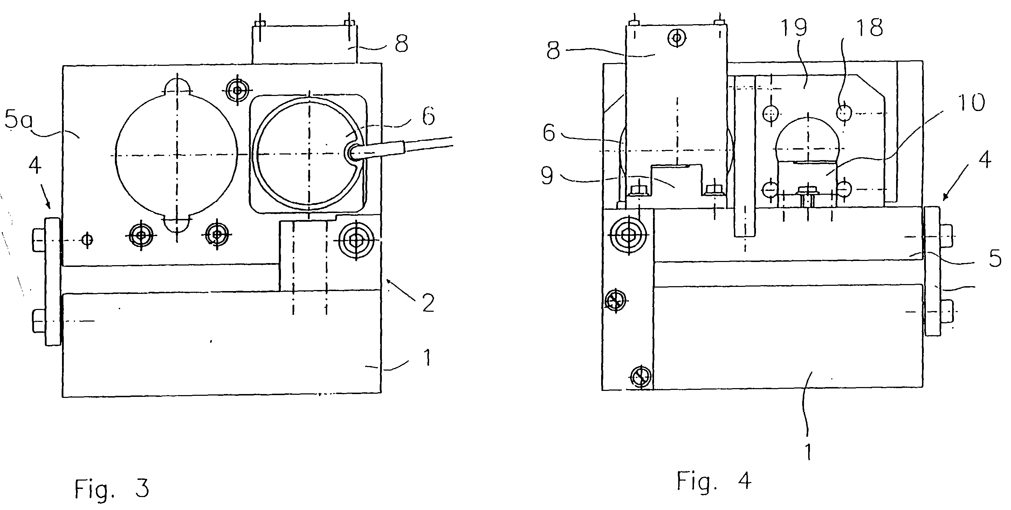

Das in den Figuren 1,2,3 und 4 dargestellte optische Gerät umfaßt im wesentlichen eine Grundplatte 1 und eine über drei Traglager 2,3 und 4 oberhalb der Grundplatte 1 im Abstand sowie bewegbar zu dieser gelagerte Bodenplatte 5, auf der ein Laser 6 und eine optische Baugruppe angeordnet sind und an der eine Stirnplatte 5a befestigt ist, wie die Zeichnung zeigt.

Die optische Baugruppe umfaßt in der Richtung des von dem Laser 6 ausgehenden Laserstrahls 7 eine Braggzelle 8, zwei Umlenkprismen 9,10, eine Zerstreuungslinse 11, eine Sammellinse 12, eine Zylinderlinse 13, ein Sendeprisma 14, eine Empfangslinse 15, ein Interferenz-Filter 16 und eine Avalanche-Fotodiode 17. Die Elemente 11,12,13,14 und 17 sind an einer üblichen Vier-Stangen-Halterung 18 angeordnet, die ihrerseits an zwei Platten 19,20 gelagert ist. Die Platten 19,20 sind an der aufrecht auf der Bodenplatte 5 angeordneten Längsplatte 21 sowie auf der Bodenplatte 5 angebracht.

Das Meßverfahren ist nicht Gegenstand der Neuerung. Deshalb wird über die Funktion der optischen Baugruppe hier nur soviel mitgeteilt, daß der von dem Laser 6 ausgehende Laserstrahl 7 durch die optische Baugruppe in zwei Teilstrahlen 22, 23 zerlegt wird, die von dem Sendeprisma 14 ausgehend als Meßstrahlen unter verschiedenen Winkeln auf eine nicht dargestellte bewegte Oberfläche eines Objektes gerichtet werden. Durch die Empfangslinse 15 wird von der Oberfläche zurückkommendes doppler-verschobenes Streulicht zu der Avalanche-Fotodiode 17 geführt. Hier wird mittels einer Auswerteelektronik aus einer dem Streulicht innewohnenden Schwebung die Geschwindigkeit der bewegten Oberfläche bestimmt. Aus diesem Ablauf wird klar, daß die Meßgenauigkeit sehr wesentlich von der Konstanthaltung einer justierten gegenseitigen Lage der beteiligten optischen Bauelemente abhängt.

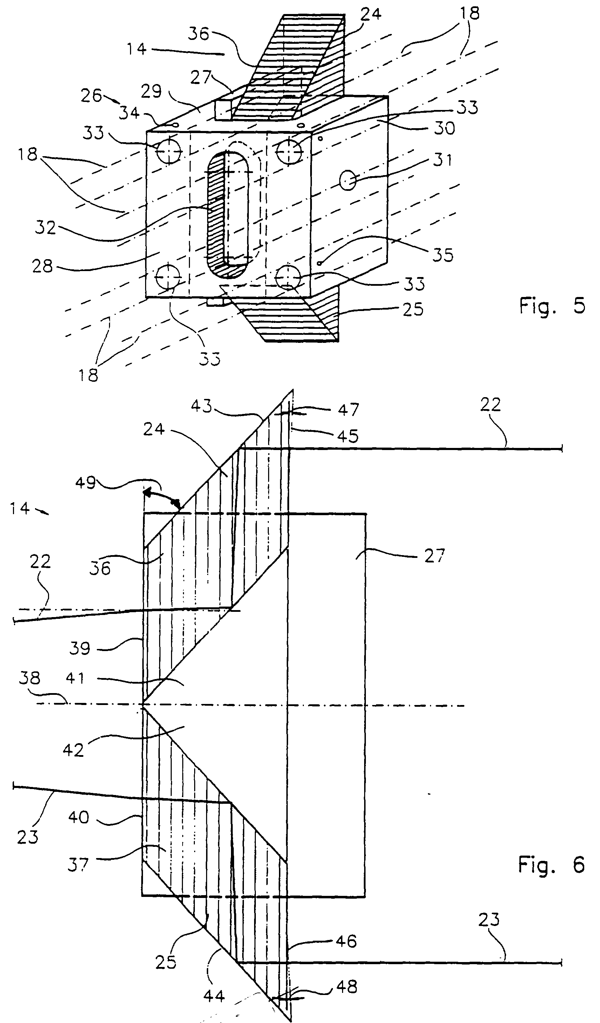

Das Sendeprisma 14 ist in Figur 5 und 6 im einzelnen dargestellt und wird im folgenden erläutert. Es besteht aus einem oberen und einem unteren rhomboederförmigen Prisma 24, 25, die mit ihren Grundflächen 36, 37 in der aus der Zeichnung ersichtlichen Anordnung auf einer aus optischem Glas, in einem bevorzugten Ausführungsbeispiel aus BK 7, bestehenden rechteckigen Platte 27 mittels eines optischen Klebers planparallel in genauer Justierung befestigt sind.

Die Platte 27 bildet mit dem Sendeprisma 14 eine fertige optische Komponente und wird mit großflächiger Anlage der Platte 37 in die Halterung 26 eingesetzt und in justierter Lage mittels einer Klemmvorrichtung festgelegt.

Hierfür umfaßt die aus Metall bestehende Halterung 26 eine Grundplatte 28 mit einem Fenster 32 für den Eintritt der Teilstrahlen 22, 23 sowie zwei Wangen 29, 30, die rechtwinklig von den Seitenrändern der Grundplatte 28 ausgehen und vorzugsweise einteilig mit der Grundplatte 28 ausgebildet sind. In dem Zwischenraum zwischen den Wangen 29, 30 wird die aus dem Sendeprisma 14 und der Platte 27 bestehende Komponente angeordnet und in justierter Lage mittels einer nicht dargestellten Feststellschraube befestigt, die in eine Gewindebohrung 31 in der Wange 30 einschraubbar ist.

Durch vier Bohrungen 33, die jeweils im Eckbereich der quadratischen Grundplatte 28 angeordnet sind und sich durch die Grundplatte 28 sowie die anschließenden Wangen 29, 30 erstrecken, greifen die Stangen der Vier-Stangen-Halterung 18, die in Figur 1 und 2 dargestellt ist. In vorbestimmter Lage wird die Halterung 26 mittels nicht dargestellter Feststellschrauben, die in beispielhaft dargestellte Gewindebohrungen 34, 35 einschraubbar sind, auf der Vier-Stangen-Halterung 18 festgelegt.

Die in das Sendeprisma 14, also in die rhomboederförmigen Prismen 24, 25 (vergl. Fig. 6) divergent eintretenden Teilstrahlen 22, 23 treffen zunächst auf die Eintrittsflächen 39, 40 der Prismen 24, 25 auf, werden hier zum Einfallslot hin gebrochen, werden von den ersten Gegenflächen 41, 42 der Prismen 24, 25 zur Verstärkung der Strahltrennung im wesentlichen nach außen - mit Bezug auf die Mittelebene 38 - reflektiert, treffen nun auf die zweiten Gegenflächen 43, 44 der Prismen 24, 25 auf, und werden von hier durch die Austrittsflächen 45, 46 konvergent austretend reflektiert.

Durch die Lage der brechenden und reflektierenden Flächen der Prismen 24, 25 und deren genau festgelegte Lage in spiegelbildlicher Anordnung zur Mittelebene 38 auf der Platte 27 werden die beiden Funktionen Verstärkung der Strahltrennung und die Herbeiführung der Konvergenz der beiden Teilstrahlen 22, 23 mit vorgegebenem Schnittwinkel erreicht. Hierfür erhalten die beiden ersten Gegenflächen 41, 42 eine Lage von 45° gegenüber der Mittelebene 38, während die zweiten Gegenflächen 43, 44 jeweils einen Neigungswinkel 49 gegenüber der Senkrechten zur Mittelebene 38 erhalten, der geringfügig über 45° liegt, und die beiden Austrittsflächen 45, 46 sind gegenüber der Senkrechten um einen geringfügigen Winkel 47 bzw. 48 derart nach vorn geneigt, daß die Teilstrahlen die Austrittsflächen 45, 46 ohne Brechung verlassen. Der 45° übersteigende Zusatzneigungswinkel jedes Winkels 49 ist hierbei etwa halb so groß wie der Neigungswinkel 47, 48 gegenüber der Senkrechten. Die genauen Winkel und Abmessungen sind nach bekannten optischen Gesetzen zu bestimmen.

Wesentlich ist jedoch für die Funktion des Sendeprismas 14, daß durch die erfindungsgemäße Ausbildung der beiden Prismen 24, 25, Insbesondere durch jeweils nur einen einzigen Prismenkörper hierfür, sowie durch die in gewissen Grenzen unkritische Lage der beiden Prismen 24, 25 zueinander und auf der Platte 27 der SchnittwinKel unveränderlich ist. Das Sendeprisma 14 ist deshalb unempfindlich gegenüber z.B. einem Höhenversatz, also gegenüber Verschiebungen in der Senkrechten sowie gegenüber Dreh- und Schwenkbewegungen in der Halterung 26, wie bereits eingangs ausführlich erläutert wurde. Lediglich Taumelbewegungen, bei der die Grundflächen 36, 37 die ihnen zugeordnete senkrechte Ebene verlassen, Konnten dazu führen, daß sich die Lage des Schnittpunkts der Teilstrahlen 22, 23 verändert.

## Patentansprüche

1. Optisches Gerät, insbesondere zur Messung der Geschwindigkeit einer bewegten Oberfläche mittels eines von einem Laser ausgehenden Meßlichtstrahls, der in zwei konvergierend auf das Meßobjekt gerichtete Teilstrahlen getrennt wird, wobei in den Meßlichtstrahl (7) des Lasers (6) ein Strahlenteiler (11, 12, 13) geschaltet ist und jedem so erzeugten Teilstrahl (22, 23) ein Prisma (24, 25) zugeordnet ist, in dem der jeweilige Teilstrahl zur Verstärkung der Trennung der beiden Teilstrahlen voneinander mit Bezug auf eine zwischen den Teilstrahlen liegende Mittelebene (38) im wesentlichen senkrecht zu dieser nach außen geführt wird, dadurch gekennzeichnet, daß zur Verstärkung der Trennung der Teilstrahlen (22, 23) voneinander als auch zu deren anschließender konvergierender Führung zu einem gemeinsamen Schnittpunkt jeweils ein einziges Prisma (24, 25) mit dementsprechend gewählten und geneigten brechenden bzw. spiegelnden Flächen (39, 45; 40, 46 bzw. 41, 43; 42, 44) vorgesehen ist und die Prismen (24, 25) mit ihren Grundflächen (36, 37) planparallel justiert auf einer ebenen Platte (27), insbesondere einer planparallelen Glasplatte, befestigt sind, die in einer Halterung (26) aufnehmbar ist.

2. Optisches Gerät nach Anspruch 1, dadurch gekennzeichnet, daß die beiden Prismen (24, 25) aus zwei etwa rhomboederförmigen Prismen bestehen, die jeweils mit einer ihrer parallelogrammförmigen Grundflächen (36, 37) auf der ebenen Platte (27), und zwar zu der senkrecht zu den Seitenflächen der planparallelen Platte (27) befindlichen Mittelebene (38) spiegelsymmetrisch übereinander, befestigt sind.

3. Optisches Gerät nach Anspruch 1 oder 2, dadurch gekennzeichnet, daß die divergent in die etwa rhomboederförmigen Prismen (24, 25) eintretenden und konvergent aus diesen austretenden Teilstrahlen (22, 23) jeweils an der Eintrittsfläche (39, 40) einer Brechung, an der ersten und zweiten Gegenfläche (41, 42 bzw. 43, 44) jeweils einer Reflexion und an der Austrittsfläche (45, 46) erneut jeweils einer Brechung unterliegen.

4. Optisches Gerät nach Anspruch 3, dadurch gekennzeichnet, daß der Teilstrahl (22, 23) an der Eintrittsfläche (39, 40) jeweils zum Einfallslot hin und an der Austrittsfläche (45, 46) jeweils vom Einfallslot weg gebrochen wird.

5. Optisches Gerät nach Anspruch 3 oder 4, dadurch gekennzeichnet, daß der Neigungswinkel (49) der zweiten Gegenfläche (43, 44) zur Mittelebene (38) geringfügig kleiner als der Neigungswinkel der ersten Gegenfläche (41, 42) gegenüber der Mittelebene (38) ist.

6. Optisches Gerät nach Anspruch 1 oder 2, dadurch gekennzeichnet, daß der Neigungswinkel (49) der zweiten Gegenflächen (43, 44) zur Mittelebene (38) geringfügig kleiner als der Neigungswinkel der ersten Gegenfläche (41, 42) gegenüber der Mittelebene (38) ist und bei dieser Lage der zweiten Gegenfläche (43, 44) die Austrittsfläche (45, 46) jedes Prismas (24, 25) um einen derartigen geringen Winkel (47, 48) gegenüber einer zur Mittelebene (38) senkrechten Ebene in Strahlrichtung nach vorn geneigt ist, so daß eine vorgegebene Konvergenz der austretenden Teilstrahlen (22, 23) ohne Brechung an der Austrittsfläche (45, 46) erreicht wird.

7. Optisches Gerät nach einem oder mehreren der Ansprüche 1 bis 6, dadurch **gekennzeichnet**, daß die Prismen (24, 25) auf der planparallelen Platte (27) mittels eines optischen Klebers befestigt sind.

8. Optisches Gerät nach einem oder mehreren der Ansprüche 1 bis 7, dadurch **gekennzeichnet**, daß die Halterung (26) aus einer Grundplatte (28) mit zwei senkrecht von der Grundplatte (28) ausgehenden und parallel sowie mit Zwischenraum angeordneten und mit planparallelen Flächen versehenen Wangen (29, 30) besteht, die Grundplatte (28) ein Fenster (32) für den Durchgang der Teilstrahlen (22, 23) aufweist und die Wangen (29, 30) im Zwischenraum eine Aufnahme für die aus der Platte (27) und den Prismen (24, 25) bestehende optische Komponente bilden.

9. Optisches Gerät nach Anspruch 8, dadurch **gekennzeichnet**, daß die Aufnahme aus einer Stützfläche an einer der Wangen (29) als Anlage für die Platte (27) und aus einer an der anderen Wange (30) ausgebildeten Klemmvorrichtung besteht, beispielsweise aus einer Klemmschraube, die in eine entsprechende Gewindebohrung (31) in der anderen Wange (30) einschraubbar ist.

10. Optisches Gerät nach Anspruch 8 oder 9, dadurch **gekennzeichnet**, daß sich durch die Grundplatte (28) und durch die Wangen (29, 30) Bohrungen (33) zur Aufnahme einer Vier-Stangen-Halterung (18) erstrecken.

## Claims

1. Optical device, particularly for measuring the speed of a moving surface by means of a measuring light beam from a laser and which is split into two convergent part beams directed onto the measuring object, a beam splitter (11, 12, 13) being placed in the measuring light beam (7) of the laser (6) and with each part beam (22, 23) produced in this way is associated a prism (24, 25), in which for increasing the splitting of the two part beams with respect to a median plane (38) located between said part beams, the particular part beam is led substantially vertically outwards with respect to said median plane, characterized in that for intensifying the splitting of the part beams (22, 23) and for their subsequent convergent guidance to a common intersection in each case a single prism (24, 25) with correspondingly chosen and inclined refractive and reflective surfaces (39, 45; 40, 46 or 41, 43; 42, 44) is provided and the prisms (24, 25) are fixed by their base surfaces (36, 37), plane-parallel and adjusted to a planar plate (27), particularly a plane-parallel glass plate, which can be received in a mounting (26).

2. Optical device according to claim 1, characterized in that the two prisms (24, 25) comprise two approximately rhombohedral prisms, which in each case are fixed by their parallelogram-shaped base surfaces (36, 37) to the planar plate (27) and namely are superimposed in mirror-symmetrical manner to the median plane (38) perpendicular to the lateral faces of the plane-parallel plate (27).

3. Optical device according to claim 1 or 2, characterized in that the part beams (22, 23) entering and convergently passing out of the approximately rhombohedral prisms (24, 25) are in each case subject at the inlet surface (39, 40) to a refraction, at the first and second counter-surfaces (41, 42 or 43, 44) in each case to a reflection and at the outlet surface (45 46) again to a refraction.

4. Optical device according to claim 3, characterized in that the part beam (22, 23) at the inlet surface (39, 40) is in each case refracted towards the entry slot and at the outlet surface (45, 46) away from the entry slot.

5. Optical device according to claim 3 or 4, characterized in that the angle of inclination (49) of the second counter-surface (43, 44) to the median plane (38) is slightly smaller than the angle of inclination of the first counter-surface (41, 42) to the median plane (38).

6. Optical device according to claim 1 or 2, characterized in that the angle of inclination (49) of the second counte-surfaces (43, 44) to the median plane (38) is slightly smaller than the angle of inclination of the first counter-surface (41, 42) to the median plane (38) and in this position of the second counter-surface (43, 44) the outlet surface (45, 46) of each prism (24, 25) is forwardly inclined in the beam direction by such a small angle (47, 48) relative to a plane perpendicular to the median plane (38), that there is a predetermined convergence of the emerging part beams (22, 23), without refraction at the outlet surface (45, 46).

7. Optical device according to one or more of claims 1 to 6, characterized in that the prisms (24, 25) are secured to the plane-parallel plate (27) by means of an optical adhesive.

8. Optical device according to one or more of claims 1 to 7, characterized in that the mounting (26) comprises a base plate (28) having two cheeks (29, 30) which extend perpendicularly from the base plate (28) and are arranged parallel and with an intermediate space and are provided with plane-parallel surfaces, the base plate (28) has a window (32) for the part beams (22, 23) to pass through, and the cheeks (29, 30) form in the intermediate space a receiver for the optical component comprising the plate (27) and the prisms (24, 25).

9. Optical device according to claim 8, characterized in that the receiver comprises a support surface against one of the cheeks (29) as a bearing surface for the plate (27) and a clamping apparatus constructed on the other cheek (30), for example comprising a clamping screw which may be screwed into a corresponding threaded bore (31) in the other cheek (30).

10. Optical device according to claim 8 or 9, characterized in that bores (33) for receiving a four-rod mounting (18) extend through the base plate (28) and through the cheeks (29, 30).

## Revendications

1. Appareil optique, notamment de mesure de la vitesse d'une surface en mouvement au moyen d'un faisceau de lumière de mesure émis par un laser qui est séparé en deux faisceaux partiels orientés de manière convergente sur l'objet à mesurer, un séparateur de faisceaux (11, 12, 13) étant monté dans le faisceau de lumière de mesure (7) du laser (6) et un prisme (24, 25) correspondant à chaque faisceau partiel (22, 23) ainsi créé, prisme dans lequel le faisceau partiel respectif est guidé vers l'extérieur, pour le renforcement de la séparation des deux faisceaux partiels l'un de l'autre, en se référant à un plan central (38), se situant entre les faisceaux partiels, de manière essentiellement perpendiculaire à celui-ci, caractérisé en ce que, pour le renforcement de la séparation des faisceaux partiels (22, 23) l'un de l'autre ainsi que pour le guidage convergent qui suit vers un point d'intersection commun, un prisme unique (24, 25) est respectivement prévu avec des surfaces réfractives et réfléchissantes (39, 45 ; 40, 46 ou 41, 43 ; 42, 44) inclinées, choisies en conséquence, et les prismes (24, 25) sont fixés avec leurs surfaces de base (36, 37) à faces planes et parallèles de manière ajustée sur une plaque plate (27), en particulier sur une plaque de verre à faces planes et parallèles, qui peut être logée dans un support (26).

2. Appareil optique selon la revendication 1, caractérisé en ce que les deux prismes (24, 25) sont constitués par deux prismes approximativement en forme de rhomboèdres qui sont fixés respectivement avec l'une de leurs surfaces de base (36, 37) en forme de parallélogramme sur la plaque plate (27), et ce l'un au-dessus de l'autre symétriquement par rapport au plan central (38) qui se trouve perpendiculairement aux faces latérales de la plaque (27) à faces planes et parallèles.

3. Appareil optique selon la revendication 1 ou 2, caractérisé en ce que faisceaux partiels (22, 23), qui entrent en étant divergents dans les prismes (24, 25) approximativement en forme de rhomboèdres et qui en sortent en étant convergents, sont soumis respectivement sur leur surface d'entrée (39, 40) à une réfraction, sur la première et la seconde surface antagoniste (41, 42 ou 43, 44) respectivement à une réflexion, et sur la surface de sortie (45, 46) de nouveau respectivement à une réfraction.

4. Appareil optique selon la revendication 3, caractérisé en ce que faisceau partiel (22, 23) est réfracté sur la surface d'entrée (39, 40) respectivement vers l'axe d'incidence et, sur la surface de sortie (45, 46), respectivement en s'éloignant de l'axe d'incidence.

5. Appareil optique selon la revendication 3 ou 4, caractérisé en ce que l'angle d'inclinaison (49) de la seconde surface antagoniste (43, 44) avec le plan central (38) est légèrement plus petit que l'angle d'inclinaison de la première surface antagoniste (41, 42) avec le plan central (38).

6. Appareil optique selon la revendication 1 ou 2, caractérisé en ce que l'angle d'inclinaison (49) des secondes surfaces antagonistes (43, 44) avec le plan central (38) est légèrement plus petit que l'angle d'inclinaison de la première surface antagoniste (41, 42) avec le plan central (38) et que, pour cette position de la seconde surface antagoniste (43, 44), la surface de sortie (45, 46) de chaque prisme (24, 25) est inclinée dans le sens du faisceau vers l'avant, par rapport à un plan perpendiculaire au plan central (38), de telle manière que l'on obtient une convergence prédéfinie des faisceaux partiels (22, 23) qui sortent sans réfraction sur la surface de sortie (45, 46).

7. Appareil optique selon l'une ou plusieurs des revendications 1 à 6, caractérisé en ce que les prismes (24, 25) sont fixés sur la plaque (27) à faces planes et parallèles au moyen d'une colle optique.

8. Appareil optique selon l'une ou plusieurs des revendications 1 à 7, caractérisé en ce que le support (26) est constitué par une plaque de base (28) avec deux joues (29, 30) qui partent verticalement de la plaque de base (28), qui sont placées parallèlement ainsi qu'avec un espace intermédiaire et qui sont pourvues de surfaces à faces planes et parallèles, que la plaque de base (28) présente une fenêtre (32) pour le passage des faisceaux partiels (22, 23) et les joues (29, 30) forment dans l'espace intermédiaire un logement pour le composant optique constitué par la plaque (27) et les prismes (24, 25).

9. Appareil optique selon la revendication 8, caractérisé en ce que le logement est constitué par une surface d'appui sur l'une des joues (29) comme appui pour la plaque (27) et par un dispositif de serrage configuré sur l'autre joue (30), par exemple par une via de serrage, qui peut être vissé dans une forure filetée correspondante (31) dans l'autre joue (30).

10. Appareil optique selon la revendication 8 ou 9, caractérisé en ce que des forures (33) s'étendent à travers la plaque de base (28) et à travers les joues (29, 30) pour le logement d'un support (18) à quatre barres.
